# EUROPEAN PATENT APPLICATION

(11) **EP 4 628 465 A1**
(43) Date of publication of application: **08.10.2025**
(21) Application number: 24382346.5
(22) Date of filing: 04.04.2024
(51) Int. Cl.: C04B 14/04, C04B 28/04, C04B 28/14, C04B 103/56, C04B 111/70, C04B 40/06, C04B 38/02, C04B 103/00, C04B 22/06, C04B 22/14, C04B 20/00, C04B 14/28, C04B 14/14, C04B 14/30, C04B 14/06, C04B 22/04, C04B 103/30, C04B 7/02, C04B 18/14, C04B 24/26

(54) **ULTRA-HIGH PERFORMANCE MORTARS AND GROUTS**

(71) Applicant: Sika Technology AG, 6340 Baar (CH)
(72) Inventor: CALAMA, Juan Antonio, 37007 Salamanca (ES)
(74) Representative: Sika Patent Attorneys

(57) **Abstract**

The present invention relates to a dry mineral composition comprising zeolites, preferably synthetic zeolites, more preferably zeolites comprising calcium and/ or sodium and/ or potassium, which is suitable for the preparation of Ultra-High-Performance Grout (UHPG) or Ultra-High-Performance Mortar (UHPM). In particular, UHPG and/or UHPM of the present invention are used for grouting of wind turbine towers offshore or onshore or as a repair grout and/or repair mortar.

## Description

### Technical Field

The present invention relates to a dry mineral composition comprising zeolites, which is suitable for the preparation of Ultra-High-Performance Grout (UHPG) or Ultra-High-Performance Mortar (UHPM). The present invention also relates to the use of such composition to reduce early shrinkage of UHPG and UHPM.

### Background of the invention

In recent years, special grouts and mortars such as Ultra-High-Performance Grout (UHPG) or Ultra-High-Performance Mortar (UHPM) have been introduced to the market. Mortars are typically used to bind surfaces, whereas grouts are used to fill voids. These Ultra-High-Performance materials are characterised by high strengths of over 60 MPa or over 80 MPa, and high durability. UHPG or UHPM typically contain a high proportion of mineral binder and a high proportion of aggregates with a fine grain size. The high proportion of fines results in good homogeneity of the materials, and the high proportion of mineral binder results in high strength.

UHPG and UHPM also contain little to very little water, since the water not needed for cement hydration evaporates, leaving pores that reduce strength. For normal concrete, the w/c ratio, i.e. the mass ratio of water to cement, is usually between 0.45 and 0.60. For UHPG and UHPM, the w/c ratio is much lower, less than 0.40 and often less than 0.30 or 0.25.

However, UHPG and UHPM also exhibit certain disadvantages, such as reduced slump flow and high early shrinkage. Therefore, these compositions have poor workability and decreased dimensional stability, which results in excessive crack formation.

To address these challenges, particularly in mitigating high early shrinkage, WO2022058454 teaches to use porous aggregates such as calcinated bauxite. These porous aggregates absorb water and decrease early shrinkage. However, due to higher density of bauxite in comparison to silica aggregates, internal stabilizers are needed to mitigate the segregation. Even then, the final density of the end product is higher than of the freshly-mixed mortar with silica aggregates, which requires to certain adjustments on the customer's end. Moreover, this technology is rather expensive.

Another technology, based on calcium sulfoaluminate (CSA) and CSA/CaO mixtures with OPC can improve the dimensional stability of cement (CN103265253, Shenyang Jianzhu University), but at the same time high aluminates and sulfates in the binder at low water contents may lead to delayed ettringite formation under certain conditions, resulting in swelling and cracking.

There is, however, still a need for further and improved UHPG and UHPM compositions, especially for UHPG and UHPM compositions with improved workability and/or increased dimensional stability, i.e. reduced early shrinkage.

### Summary of the invention

It is an objective of the present invention to provide a dry mineral composition suitable for the preparation of Ultra-High-Performance Grout (UHPG) or Ultra-High-Performance Mortar (UHPM). Preferably, the present invention provides a dry mineral composition suitable for the preparation of UHPG and UHPM of reduced early shrinkage.

It has surprisingly been found that the objective of the present invention is solved by the subject matter of claim 1. It is thus at the core of the present invention to add zeolites to a mineral composition to reduce early shrinkage of said dry mineral composition. In this context, "reduction" refers to a process of diminishing the extent of early shrinkage observed in a dry mineral composition when zeolites are added in comparison to the same composition without zeolites.

The present invention makes use of the finding that zeolites can be used as cement additives, especially when activated in the alkali suspension such as cement suspension. In such conditions, zeolites significantly improve dimensional stability, i.e. reduce early shrinkage, of grouts and mortars. Due to their excellent ion-binding properties, zeolites reduce internal stresses during dissolution, precipitation and, especially, hydration, when less cations and water available leads to reduced early chemical and autogenous shrinkage. In other words, the internal stresses are reduced as zeolites act as calcium ions and water releasing controllers. The shrinkage reduction will depend on the hydration kinetics and the calcium and water binding capacity of the zeolite.

Further aspects of the present invention are the subject of independent claims. Preferred embodiments are the subject matter of dependent claims.

### Ways to carry out the invention

In a first aspect the present invention relates to a dry mineral composition comprising, relative to the total dry weight of the mineral composition,
a) 5 to 75 wt. %, preferably 10 to 60 wt. %, more preferably 25 to 50 wt. % of at least one cementitious binder, preferably Portland cement;
b) 0.1 to 5 wt. %, preferably 0.1 to 3.5 wt. %, more preferably 2 to 3.5 wt. % of at least one pozzolane;
c) 0.1 to 10 wt. %, preferably 0.1 to 5 wt. %, more preferably 0.5 to 3 wt. % of calcium oxide;
d) 0.1 to 10 wt. %, preferably 0.1 to 5 wt. %, more preferably 0.5 to 3 wt. % of at least one source of calcium sulfate, preferably calcium sulfate hemihydrate;
e) 0.1 to 10 wt. %, preferably 0.5 to 7 wt. %, more preferably 0.5 to 3 wt. % of zeolite;
f) 15 to 85 wt. %, preferably 20 to 70 wt. %, more preferably 30 to 70 wt. % of aggregates;
g) 0.005 to 5 wt. %, preferably 0.01 to 4 wt. %, more preferably 0.1 to 3 wt. % of cement additives.

A mineral composition as used herein refers to materials that comprise at least one cementitious binder. A cementitious binder, in the context of the present invention, is a binder, which in the presence of water reacts in a hydration reaction to form solid hydrates or hydrate phases. This can be, for example, a hydraulic binder (e.g. cement or hydraulic lime), a latent hydraulic binder (e.g. slag), a pozzolanic binder (e.g. fly ash) or a nonhydraulic binder (gypsum plaster or white lime).

Particular preference is given to a cement having a cement clinker content of ≥ 35 wt. %. In particular, the cement is of the type CEM I, II, III, IV or V (according to the standard EN 197-1) or one of the cement type I, IA, II, IIA, II(MH), II(MH)A, III, IIIA, IV or V (according to the standard ASTM C150). A proportion of the hydraulic binder in the total cementitious binder is advantageously at least 5 wt. %, in particular at least 20 wt. %, preferably at least 35 wt. %, especially at least 65 wt. %. In a further advantageous embodiment, the cementitious binder consists to an extent of at least 95 wt. % of a hydraulic binder, in particular cement clinker.

In a particularly preferred embodiment, the cementitious binder composition of the present invention comprises at least Ordinary Portland Cement (OPC) as a cementitious binder. According to embodiments, the content of OPC in a cementitious composition of the present invention is in the range of 4 - 75 wt. % preferably 26 - 75 wt. %, especially 30 - 66 wt. %, in each case relative to the total dry weight of the cementitious composition.

It is further possible, in a cementitious composition of the present invention, to use special cements, such as calcium sulfoaluminate cement, calcium aluminate cement, or mixtures thereof in addition to the OPC.

According to certain embodiments, the OPC is a CEM I under standard DIN 197-1. However, other OPC classified, for example, under the relevant ASTM, JIS or Chinese standards is also suitable. According to further embodiments, the OPC is a white cement. White cements can be preferred within the present context as they have a lower water demand. According to preferred embodiments, the cementitious binder, especially the OPC, has a low content of tricalcium aluminate (C3A). A low content means that the content of C3A in the cementitious binder of the present invention preferably is <10 wt. %, more preferably <5 wt. %, each based on the total dry weight of the cementitious binder.

In one advantageous embodiment, a suitable cementitious binder consists of 100 wt. % of Ordinary Portland Cement.

According to further embodiments the cementitious binder composition comprises other binders in addition to or instead of a hydraulic binder. These are, in particular, latent hydraulic binders and/or pozzolanic binders. Suitable latent hydraulic and/or pozzolanic binders are, for example, slag, fly ash, silica dust, silica fume, rice husk shale, burnt shale, trass, and pumice. In an advantageous embodiment, the cementitious binder contains 5-95 wt. %, in particular 5-65 wt. %, especially 15-35 wt. %, of latent hydraulic and/or pozzolanic binders, relative to the total dry weight of the cementitious binder.

According to some embodiments, the said cementitious binder composition comprises at least one hydraulic binder, at least one latent hydraulic and/or pozzolanic binders and clays, especially calcinated clays.

According to preferable embodiment, the said cementitious binder composition comprises cement and at least one latent hydraulic binder.

According to another preferable embodiment, the said cementitious binder composition comprises cement and at least one pozzolanic binder.

According to yet another preferable embodiment, the said cementitious binder composition comprises cement and at least one nonhydraulic binder.

According to still further embodiments, the pozzolane is silica fume and/ or silica flour, preferably silica fume.

According to embodiments, silica fume has a particle size D50 in the range 0.01 - 1 µm, preferably 0.05 - 0.5 µm, more preferably 0.1 - 0.3 µm, according to the standard ISO 13320:2009. According to further embodiments, silica fume has a BET surface area in the range of 5 - 100 m²/g, preferably 5 - 50 m²/g, more preferably 15 - 25 m²/g, measured according to the standard ISO 9277:2022.

The cementitious binder composition may also be based on calcium sulfate and/or lime as a binder. Calcium sulfate is meant to encompass any of anhydrite, alpha- and beta-calcium sulfate hemihydrate, and calcium sulfate dihydrate. Lime is meant to encompass any of hydraulic lime, air lime, and natural hydraulic lime.

A dry mineral composition of the present invention comprises 0.1 to 10 wt. %, preferably 0.1 to 5 wt. %, more preferably 0.5 to 3 wt. % of calcium oxide. Calcium oxide, within the present context, refers to calcium oxide powder.

According to embodiments, as an alternative to calcium oxide, magnesium oxide can be used in the present invention.

A cementitious binder composition of the present invention may also comprise further ingredients. Preferably, such further ingredients are selected from at least one of aggregates, fillers, additives, and water.

The term aggregate as used in the context of the present invention refers to mineral materials that are non-reactive in the hydration reaction of cementitious binders. Aggregates can be any aggregate typically used for cementitious materials such as concrete, mortars, screeds, renders, grouts, coatings, putties or the like. Typical aggregates are for example rock, crushed stone, gravel, slag, limestone, sand, recycled concrete, perlite or vermiculite.

According to embodiments, the aggregates are selected from at least one of limestone, granite, basalt, olivine, aluminum oxide, sand or a combination thereof, preferably sand.

A mineral composition of the present invention may comprise 15 - 85 wt.-%, preferably 20 - 70 wt.-%, especially 30 - 70 wt.-%, in each case relative to the total dry weight of the mineral composition, of at least one aggregate.

According to embodiments, aggregates having a grain size as determined by sieve analysis according to EN 12192-1:2002 or EN 933-1:2012 in the range of 0.036 mm to 7 mm, preferably 0.125 mm to 6 mm, more preferably 0.25 mm to 3 mm are used in a dry mortar of the present invention.

According to a particularly preferred embodiment, at least one aggregate comprises or consists of sand. Sand is a naturally occurring granular material composed of finely divided rock or mineral particles. It is available in various forms and sizes. Especially, the at least one aggregate consist of sand, in particular quartz sand, river sand, manufactured sand, for example from granite or limestone, or mixtures thereof. Suitable sands are described in standards ASTM C778 or EN 196-1.

Fillers within the present context are mineral additions of low particle size that have no cementitious properties. Typical fillers are finely ground calcium carbonates, silica flour, microsilica.

Additives can be any typically used in the concrete or mortar industry. Typical additives include plasticizers, thickeners, retarders, air-entrainers, de-aerating agents, defoamers, corrosion inhibitors, fibers, synthetic organic polymers, expansion producing additives, pigments, strength enhancers, waterproofing additives, alkali-aggregate reaction inhibitors, chromate reducers, and/or anti-microbial agents.

Preferred additives are shrinkage reducing agents, plasticizers, stabilizers, retardants, accelerators, absorbers and gas expanding agents.

According to preferable embodiments, a plasticizer additive comprising a polycarboxylate ether (PCE) is present.

Shrinkage reducing agents within the present context are organic molecules and are selected from glycols, preferably polypropylene glycols, polyethylene glycols, or mixed polypropylene-polyethylene glycols, alkyl ethers of polyalkylene glycols, especially neopentyl glycols, polyols, especially glycerin or erythritol, alkoxylated polyols, especially alkoxylated glycerin or alkoxylated erythritol, alkylated ethanolamine, carboxylic acid esters of polyalkylene glycols, especially fatty acid ester of polyalkylene glycols.

Gas expanding agents within the present context are additives added to said mineral composition to induce controlled expansion during the setting and hardening process. In particular, they reduce shrinkage, especially early shrinkage, of a mineral composition of the present invention. Furthermore, they enhance freeze-thaw resistance of the claimed mineral composition.

According to embodiments, at least one of the cement additives is aluminium powder present in the amount between 0.0001 and 1%, preferably 0.0001 and 0.1 wt. %.

Aluminium powder within the present context is composed of finely grounded particles of aluminium and can act as a gas expanding agent, also called air-entraining agent. The function of such gas expanding agent is to entrain microscopic air bubbles in the cementitious composition, which then harden as microscopic voids in mortar and/or grout, thereby improving freeze-thaw resistance. It can be characterized by its particle size. According to embodiments, in the dry mineral composition of the present invention, the aluminium powder has a particle size D50 in the range of 0.1 - 150 µm, preferably 0.1 - 80 µm, more preferably 0.1 - 50 µm, still more preferably 0.1 - 45 µm, especially 0.1 - 30 µm.

Another particularly useful gas expanding agent is azodicarbonamide. According to embodiments of the present invention, a mineral composition comprises azodicarbonamide in the amount from 0.001 to 1 wt. %, preferably 0.001 to 0.1 wt. % relative to the total dry weight of the dry mineral composition.

According to embodiments, the abovementioned other additives can be added to cement during the cement manufacturing process and/or at the construction site.

Zeolites are hydrated, microporous aluminosilicates, which might comprise alkali and alkaline earth metals in their framework. The term zeolite as used in the context of the present invention refers to a natural or a synthetic material. According to embodiments, a dry mineral composition is characterized in that the zeolite is a synthetic zeolite. Synthetic zeolites are preferred due to their predictable behavior. The term "zeolite" might refer to secondary cementitious materials (SCM) or cement additives. Zeolites within the present context are cement additives.

According to preferred embodiments, the zeolite comprises calcium and/ or sodium and/ or potassium.

According to further embodiments, the zeolite is characterized by the following formula: xSiO₂ · Al₂O₃ · nK₂O · zCaO · wNa₂O ·yH₂O
where
x = 2 - 3, preferably 2 - 2.5, most preferably 2 or 2.5,
y = 4 - 9, preferably 4.5 - 9, most preferably 4.5 or 9,
z = 0 - 1, preferably 0 - 0.7, most preferably 0 or 0.7,
w = 0.1 - 1, preferably 0.3 - 1, most preferably 0.3 or 0.62 or 1,
n = 0.1 - 1, preferably 0.38 - 1, most preferably 0.38 or 1.

In one advantageous embodiment, the zeolite is characterized by the following formula: 2 SiO₂ · Al₂O₃ · Na₂O ·4.5 H₂O.

In another advantageous embodiment, the zeolite is characterized by the following formula: 2.5 SiO₂ · Al₂O₃ · Na₂O ·9 H₂O.

In another advantageous embodiment, the zeolite is characterized by the following formula: 2 SiO₂ · Al₂O₃ · 0.7 CaO · 0.3 Na₂O ·4.5 H₂O.

In yet another advantageous embodiment, the zeolite is characterized by the following formula: 2SiO₂ · Al₂O₃ · 0.38 K₂O · 0.62 Na₂O · 4.5 H₂O.

According to further embodiments, mixtures of different types of zeolites can be used in the present invention.

According to still further embodiments, the zeolite has an average particle size D50 between 0.1 µm and 20 µm, preferably 1 µm 10 µm, more preferably 2 µm and 6 µm, the most preferably between 2 µm and 5 µm as determined by sieve analysis according to EN 12192-1:2002 or EN 933-1:2012. The particle size D50 corresponds to the median particle size.

According to still further embodiments, the zeolite has a water adsorption capacity of at least 20% at 20 °C and 50% RH, preferably at least 30% at 20 °C and 50% RH.

According to still further embodiments, the calcium binding capacity of the zeolite is at least 130 mg CaO/g, preferably at least 160 mg CaO/g.

The calcium binding capacity was measured according to method II described in EP0384070 (Unilever PLC, Unilever NV). A zeolite sample was first equilibrated to constant weight (over saturated NaCl solution) and the water content measured. Each equilibrated sample was dispersed in water (1 cm³) in an amount corresponding to 1 g dm⁻³ (dry), and the resulting dispersion was injected into a stirred solution of total volume 54.923 cm³, consisting of 0.01M NaCl solution (50 cm³) and 0.05M CaCl2 (3.923 cm³). This corresponded to a concentration of 200 mg CaO per liter, i.e. just greater than the theoretical maximum amount (197 mg) that can be taken up by a zeolite of Si:Al ratio 1.00. The change in Ca²⁺ ion concentration was measured by using a Ca²⁺ ion selective electrode, the final reading being taken after 15 minutes. The temperature was maintained at 25°C throughout. The Ca²⁺ ion concentration measured was subtracted from the initial concentration, to give the effective calcium binding capacity of the zeolite sample. In a preferred embodiment, suitable zeolite for use in the present invention is 4A, 13X, 5AH or 3AH38.

In a particularly preferred embodiment, zeolite for use in the present invention is zeolite type 4A.

According to still further embodiments, the present invention relates to a hardened mineral composition obtainable by curing mineral composition described above where water is present.

In one advantageous embodiment, the present invention relates to a dry mineral composition described above and water, wherein the amount of water is 5 to 50 wt. %, preferably 5 to 40 wt. %, more preferably 5 to 30 wt. %, still more preferably 5 to 20 wt. %, in particular 5 to 10 wt. %, in each case relative to the total weight of the dry mineral composition.

Water can be any water available such as distilled water, purified water, tap water, mineral water, spring water, and well water. The use of waste water is possible only in cases where the composition of such waste water is known and where none of the impurities comprised may impart the functionality of any other component of the composition of the present invention.

Methods and devices for mixing a dry cementitious composition with water are known to the person skilled in the art. It is for example possible to mix dry cementitious composition with water by means of hand held agitators, Hobart mixers, portable concrete mixers, mixing trucks, mixing buckets, paddle mixers, jet mixers, screw mixers, auger mixers, horizontal single shaft mixers, twin shaft paddle mixers, vertical shaft mixers, ribbon blenders, orbiting mixers, change-can mixers, tumbling vessels, vertical agitated chambers or air agitated operations. Mixing can be continuously, semi-continuously or batch-wise. Continuous mixing offers the advantage of a high production speed.

In one embodiment, the present invention relates to a method for the production of a mineral composition, said method comprising the steps of
a) providing
   - 5 to 75 wt. %, preferably 10 to 60 wt. %, more preferably 25 to 50 wt. % of at least one cementitious binder, preferably Portland cement;
   - 0.1 to 5 wt. %, preferably 0.1 to 3.5 wt. %, more preferably 2 to 3.5 wt. % of at least one pozzolane;
   - 0.1 to 10 wt. %, preferably 0.1 to 5 wt. %, more preferably 0.5 to 3 wt. % of calcium oxide;
   - 0.1 to 10 wt. %, preferably 0.1 to 5 wt. %, more preferably 0.5 to 3 wt. % of at least one source of calcium sulfate, preferably calcium sulfate hemihydrate;
   - 0.1 to 10 wt. %, preferably 0.5 to 7 wt. %, more preferably 0.5 to 3 wt. % of zeolite;
b) admixing 15 to 85 wt. %, preferably 20 to 70 wt. %, more preferably 30 to 70 wt. % of aggregates;
c) admixing 0.005 to 5 wt. %, preferably 0.01 to 4 wt. %, more preferably 0.1 to 3 wt. % of cement additives; and
d) optionally, admixing water.

All features and embodiments as described above, also applied to this aspect.

In another aspect the present invention relates to the use of a said composition for the preparation of Ultra-High-Performance Grout (UHPG) or Ultra-High-Performance Mortar (UHPM), in particular for the purpose of grouting of wind turbine towers offshore or onshore or as a repair grout and/or repair mortar.

According to still further embodiments, the present invention relates to the use of a zeolite in a dry mineral composition described above as an additive for a mortar and/or grout composition.

According to still further embodiments, the present invention relates to the use of a dry mineral composition described above for mortar and/or grout of reduced early shrinkage, when compared to the same mineral binder or mineral binder composition without a zeolite addition.

The term "reduced early shrinkage" within the present context relates to a reduction of shrinkage and/or expansion of a cementitious composition as compared to a non-inventive composition without addition of zeolite, especially synthetic zeolite, more especially of zeolite of type 4A.

Shrinkage and/or expansion starts with the addition of water to a cementitious composition and continues during setting and hardening. Early shrinkage in cement refers to the phenomenon where concrete experiences shrinkage shortly after it is poured and begins to harden. This shrinkage occurs during the initial stages of hydration, which is the chemical reaction between cement and water that forms the concrete matrix. As water is consumed during hydration, the volume of the concrete decreases, leading to shrinkage. Thus, within the present context, shrinkage includes autogenous shrinkage and chemical shrinkage. Shrinkage and/or expansion can be measured according to, for example, standards EN 12617-4 (dimensional stability), ASTM C827 (fresh mortar expansion), and ASTM C1698 (autogenous shrinkage).

A reduced shrinkage is desirable because this leads to less cracking and thus to a longer service life of any object obtained by hardening a dry mineral composition of the present invention.

According to still further embodiments, the present invention relates to the use of a zeolite in a dry mineral composition described above to reduce early shrinkage of a mortar and/or grout composition, when compared to the same mineral binder or mineral binder composition without a zeolite addition.

According to still further embodiments, the present invention relates to the use of a zeolite in a dry mineral composition described above to improve the workability, i.e. increase slump flow, of a mortar and/or grout composition, when compared to the same mineral binder or mineral binder composition without a zeolite addition.

According to still further embodiments, the present invention relates to the use of a zeolite in a dry mineral composition described above to increase compressive strength, especially at early age, of a mortar and/or grout composition, when compared to the same mineral binder or mineral binder composition without a zeolite addition.

According to still further embodiments, the present invention relates to the use of a zeolite, at least one pozzolane, calcium oxide, source of calcium sulfate and additives to reduce early shrinkage of a mortar and/or grout composition.

According to preferred embodiments, the present invention relates to the use of, relative to the total dry weight of the mineral composition,
a) 0.1 to 10 wt. %, preferably 0.5 to 7 wt. %, more preferably 0.5 to 3 wt. % of zeolite;
b) 0.1 to 5 wt. %, preferably 0.1 to 3.5 wt. %, more preferably 2 to 3.5 wt. % of at least one pozzolan;
c) 0.1 to 10 wt. %, preferably 0.1 to 5 wt. %, more preferably 0.5 to 3 wt. % of calcium oxide,
d) 0.1 to 10 wt. %, preferably 0.1 to 5 wt. %, more preferably 0.5 to 3 wt. % of at least one source of calcium sulfate, preferably calcium sulfate hemihydrate;
e) 0.005 to 5 wt. %, preferably 0.01 to 4 wt. %, more preferably 0.1 to 3 wt. % of cement additives.
to reduce early shrinkage of a mortar and/or grout composition.

All features and embodiments as described above, also applied to this aspect.

The following examples will further illustrate the present invention. They are not intended to limit the scope of the invention in any way.

### Examples

The following Table 1 shows an overview of materials used.

**Table 1: Raw materials used**

| | |
|---|---|
| Cement | White cement BL 152.5 R |
| Sand | Silica sand and/or limestone sand, particle sizes: 0.1 - 5 mm |
| Porous aggregate | Bauxite, grain size: 0.1 to 3 mm |
| Silica fume | BET 18 - 22 m²/g, particle size: 0.1 - 0.3 µm |
| Silica flour | Particle size: ≤ 0.150 mm |
| CaSO4 | Hemihydrate |
| Zeolite | Type 4A |

**Table 2: Tested grout specimens (all amount in wt. %, relative to overall dry grout composition)**

| Example | Ref1 | Ref2 | Inv1 |
|---|---|---|---|
| Cement | 38 | 37 | 36 |
| Silica fume | 2.3 | 2.3 | 3.3 |
| Silica flour | 1.5 | - | - |
| Sand | 56.67 | 52.30 | 55.77 |
| Porous aggregate | - | 6 | - |
| Limestone filler | - | 1.5 | - |
| CaO | - | - | 1.5 |
| Zeolite | - | - | 0.8 |
| CaSO4 | 0.55 | - | 1.5 |
| Additives^{*1} | 0.98 | 0.9 | 1.13 |

| | | | |
|---|---|---|---|
| *¹ shrinkage reducers, plasticizer, stabilizer, retardants, accelerator, absorbers, gas expanding agents | | | |

Dry mixes were prepared by thoroughly mixing the dry materials as indicated in above Table 2 on a V mixer until visually homogeneous. Water was then added in the amount of 8 wt. % in reference to the total mass of a dry mortar compositions (examples Ref1 and Inv1) and 7 wt. % in reference to the total mass of a dry mortar compositions (example Ref2). The mixing continued for an additional 5 minutes in a Hobart mixer. The liquid grout compositions were then immediately used for the following testing.

The workability, i.e. slump flow was tested according to UNE EN 13395-1:2002 and compressive strength was tested according to UNE EN 12190:1999 after the time indicated in below Table 3. The early shrinkage was tested according to the internal method. The method used a test set up described in 12617-4:2002, having an additional displacement sensor placed in the hole of one of the mould holders to check the displacement from casting. The measurement procedure was adjusted to simulate real-life conditions when grouting wind turbine towers and, therefore, the top of the mould was covered with a lid to prevent contact with oxygen. In contrary to the autogenous shrinkage procedure according to ASTM C1698:2019, the movement of the grout paste was restricted to only one direction, where the sensor was situated. The displacement of grout paste upon hardening, i.e. shrinkage and/or expansion, was registered continuously within first 24 hours after casting. The early shrinkage value presented in Table 3, corresponds to the displacement value reached after 24 h from casting.

**Table 3: Testing of grouts (examples Ref.1 and Ref.2 are not according to the present invention; example Inv. 1 is according to the present invention)**

| | Ref.1 | Ref.2 | Inv.1 |
|---|---|---|---|
| Slump flow 5 min [mm] | 296 | 250 | 296 |
| Early shrinkage^{*1} [mm/m] | -1 | -0.25 | -0.13 |
| Compressive strength 28 days [MPa] | 111.83 | 118.54 | 111.23 |

| | | | |
|---|---|---|---|
| *¹ negative values indicated shrinkage | | | |

Example Ref.1 is not according to the present invention and corresponds to the UHPG without any addition of a porous material, neither bauxite nor zeolite. Example Ref.2 is not according to the present invention and corresponds to the UHPG with the addition of bauxite. Example Inv.1 is according to the present invention and corresponds to the UHPG with the addition of zeolite.

It can be seen from the above examples that inventive composition shows significantly reduced early shrinkage than a standard UHPG formulation and reduced early shrinkage in comparison to UHPG with the addition of bauxite. At the same time, the workability of the inventive example did not decrease in comparison to a standard UHPG formulation, as it was noted for the reference example Ref.2. The compressive strength of the inventive composition Inv.1 reached the same value range as that of the reference composition Ref.1.

## Claims

1. A dry mineral composition comprising, relative to the total dry weight of the mineral composition,
a) 5 to 75 wt. %, preferably 10 to 60 wt. %, more preferably 25 to 50 wt. % of at least one cementitious binder, preferably Portland cement;
b) 0.1 to 5 wt. %, preferably 0.1 to 3.5 wt. %, more preferably 2 to 3.5 wt. % of at least one pozzolan;
c) 0.1 to 10 wt. %, preferably 0.1 to 5 wt. %, more preferably 0.5 to 3 wt. % of calcium oxide;
d) 0.1 to 10 wt. %, preferably 0.1 to 5 wt. %, more preferably 0.5 to 3 wt. % of at least one source of calcium sulfate, preferably calcium sulfate hemihydrate;
e) 0.1 to 10 wt. %, preferably 0.5 to 7 wt. %, more preferably 0.5 to 3 wt. % of zeolite;
f) 15 to 85 wt. %, preferably 20 to 70 wt. %, more preferably 30 to 70 wt. % of aggregates;
g) 0.005 to 5 wt. %, preferably 0.01 to 4 wt. %, more preferably 0.1 to 3 wt. % of cement additives.

2. The dry mineral composition according to claim 1, **characterized in that** the zeolite is a synthetic zeolite.

3. The dry mineral composition according to at least one of claims 1 or 2, wherein the zeolite comprises calcium and/ or sodium and/ or potassium.

4. The dry mineral composition according to at least one of the preceding claims, wherein the zeolite is **characterized by** the following formula: xSiO₂ · Al₂O₃ · nK₂O · zCaO · wNa₂O ·yH₂O
where
x = 2 - 3, preferably 2 - 2.5, most preferably 2 or 2.5,
y = 4 - 9, preferably 4.5 - 9, most preferably 4.5 or 9,
z = 0 - 1, preferably 0 - 0.7, most preferably 0 or 0.7,
w = 0.1 - 1, preferably 0.3 - 1, most preferably 0.3 or 0.62 or 1,
n = 0.1 - 1, preferably 0.38 - 1, most preferably 0.38 or 1.

5. The dry mineral composition according to at least one of the preceding claims, wherein the zeolite has an average particle size D50 between 0.1 µm and 20 µm, preferably 1 µm and 10 µm, more preferably 2 µm and 6 µm, the most preferably between 2 µm and 5 µm as determined by sieve analysis according to EN 12192-1:2002 or EN 933-1:2012.

6. The dry mineral composition according to at least one of the preceding claims, wherein the zeolite has a water adsorption capacity of at least 20% at 20 °C and 50% RH.

7. The dry mineral composition according to at least one of the preceding claims, **characterized in that** the aggregates are selected from at least one of limestone, granite, basalt, olivine, aluminum oxide, sand or a combination thereof, preferably sand.

8. The dry mineral composition according to at least one of the preceding claims, **characterized in that** the pozzolane is silica fume and/ or silica flour, preferably silica fume.

9. The dry mineral composition according to at least one of the preceding claims, wherein a plasticizer additive comprising a polycarboxylate ether is present.

10. The dry mineral composition according to at least one of the preceding claims, wherein aluminium powder is present in the amount between 0.0001 and 1 wt. %, preferably 0.0001 and 0.1 wt. %.

11. A composition comprising the dry mineral composition according to any claims 1-10 and water, wherein the amount of water is 5 to 50 wt. %, preferably 5 to 40 wt. %, more preferably 5 to 30 wt. %, still more preferably 5 to 20 wt. %, in particular 5 to 10 wt. %, in each case relative to the total weight of the dry mineral composition.

12. Hardened mineral composition, obtainable by curing a composition according to claim 11.

13. Use of a composition according to claim 11 for the preparation of Ultra-High-Performance Grout (UHPG) or Ultra-High-Performance Mortar (UHPM), in particular for the purpose of grouting of wind turbine towers offshore or onshore or as a repair grout and/or repair mortar.

14. Use of a zeolite, at least one pozzolane, calcium oxide, source of calcium sulfate and additives to reduce early shrinkage of a mortar and/or grout composition.
